Europäisches Patentamt

European Patent Office

Office européen des brevets

(11) Publication number: 0 354 546
A2

## (12) EUROPEAN PATENT APPLICATION

(21) Application number: 89114711.8

(22) Date of filing: 09.08.89

(51) Int. Cl.⁴: D04H 1/64

(30) Priority: 11.08.88 US 230812

(43) Date of publication of application:
14.02.90 Bulletin 90/07

(84) Designated Contracting States:
AT BE CH DE ES FR GB GR IT LI LU NL SE

(71) Applicant: The B.F. Goodrich Company
3925 Embassy Parkway
Akron Ohio 44313(US)

(72) Inventor: Seletzky, Peter Dresel
21520 Oak Bark Trail
Cleveland Ohio 44136(US)
Inventor: Rognstad, Donald James
307 Eagle Circle
Elyria Ohio 44035(US)

(74) Representative: von Kreisler, Alek,
Dipl.-Chem. et al
Patentanwälte Von Kreisler-Selting-Werner
Deichmannhaus am Hauptbahnhof
D-5000 Köln 1(DE)

(54) Porous nonwoven flat sheet.

㊗ A high tensile strength, porous, nonwoven flat sheet is produced by treating a high loft nonwoven fibrous mat with a binder and compressing the same under heat and pressure to form the flat sheet. The compressed nonwoven flat sheet exhibits a tensile strength of at least 5 pounds per inch and a porosity between 2.5 sec. and 40 sec. The compressed, nonwoven flat sheet is useful as a filter media for contaminated gases.

EP 0 354 546 A2

## POROUS NONWOVEN FLAT SHEET

FIELD OF THE INVENTION

The present invention relates to a high tensile strength, porous, nonwoven, fibrous sheet and more particularly to a method of forming a compressed high tensile porous flat sheet from a high loft nonwoven mat.

BACKGROUND

Heretofore, nonwoven mats have been made from randomly orientated synthetic fibers loosely bound together. Such mats can contain a high fiber content or a low fiber content and can be a high loft nonwoven mat.

SUMMARY OF THE INVENTION

It now has been found that high loft nonwoven mat or fabric can be treated with considerable amounts of organic binder, dried to remove volatiles, and then compressed under high pressure and at elevated temperatures to produce a high tensile strength compressed fibrous flat sheet exhibiting high porosity. The highly porous, high tensile strength, compressed nonwoven fibrous sheet is particularly useful as an air filter media, packaging resilient material, a reinforcing backing sheet for fabrics, housewrap, and similar applications requiring a highly porous, high tensile strength fibrous sheet. These and other advantages of this invention will become more apparent by referring to the drawing, the detailed description of the invention, and the illustrative examples herein.

A highly porous, high tensile strength, compressed nonwoven fibrous sheet is thus produced by treat ing a high loft nonwoven mat with at least five weight parts of an organic polymeric binder per 100 weight parts of a mat, and compressing the treated mat under pressure at an elevated temperature for sufficient time to form a compressed, fibrous flat sheet exhibiting high porosity and high tensile strength.

BRIEF DESCRIPTION OF THE DRAWINGS

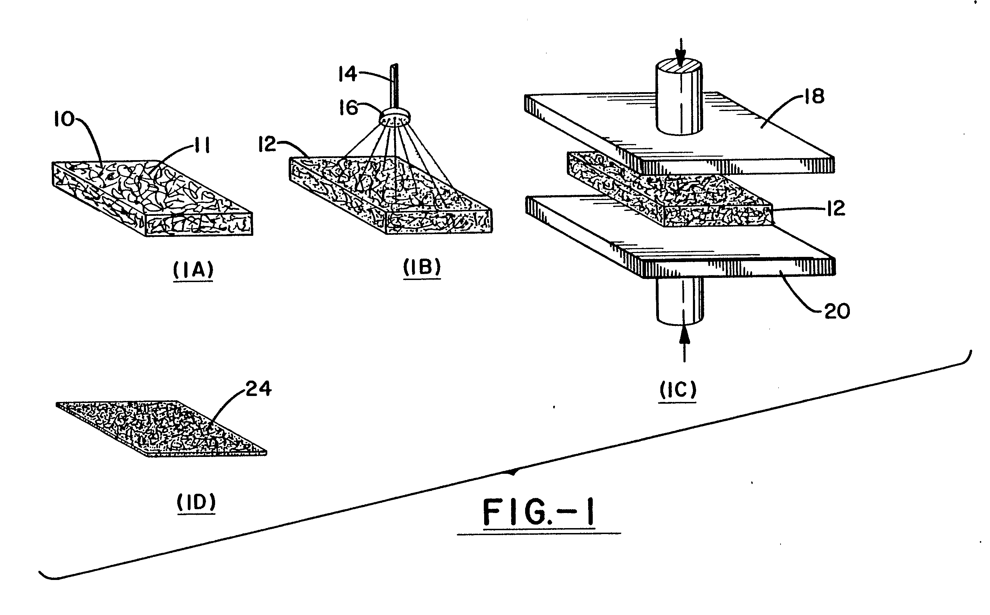

Fig. 1 illustrates the process of the present invention as by combining a high loft nonwoven fibrous mat with a resin binder, and compressing the binder-mat composite to produce a high tensile strength, porous nonwoven flat sheet.

DETAILED DESCRIPTION OF THE INVENTION

In accordance with the concepts of the present invention, a high loft nonwoven fibrous mat is treated with considerable amounts of organic polymeric binder and compressed under heat and pressure to form a compressed fibrous sheet.

Referring now to the drawings wherein like reference characters indicate like parts, Fig. 1(a) shows a high loft nonwoven fibrous mat having a thickness usually in excess of 1/8 inch is generally indicated by the numeral 10 comprising randomly orientated long fibers 11. In Fig. 1(b), polymeric resin binder 16 is spray applied through a spray means 14 to the mat 10 to form a resin impregnated composite 12. In Fig. 1(c), the binder-mat composite 12 is compressed between an upper heated platen 18 and a lower heated platen 20 at sufficient pressure above 1 psi for time sufficient to enable the polymeric binder to flow out through the composite 12 to produce a high tensile strength, porous, nonwoven fibrous flat sheet 24 shown in Fig. 1(d).

Considering the organic polymeric binders, they can be any binders known to the art and to the literature. Suitable binders include polymers and copolymers such as polyvinyl chloride, polyvinyl chloride-acrylates, polyacrylics, polyvinyl esters, polyvinyl ester-acrylics, polyethylene-vinyl esters, polyurethanes, polystyrene-butadiene latexes, polyacrylonitriles, polybutadiene copolymers, and the like. Acrylic polymers and copolymers, particularly with vinyl chloride, are preferred.

Acrylic polymers and copolymers are addition polymers produced from polymerizable ethylenically unsaturated monomers containing carbon-to-carbon double bond unsaturation. In addition to acrylic monomers, acrylic copolymers can include copolymerized vinyl monomers, nitrile monomers, allylic monomers, and acrylamide monomers. Acrylic monomers include monomers such as lower alkyl esters of acrylic or methacrylic acid having an alkyl ester portion containing between 1 to 12 carbon atoms as well as aromatic derivatives of acrylic and methacrylic acid. Useful acrylic monomers include, for example, acrylic and methacrylic acid, methyl acrylate and methacrylate, ethyl acrylate and methacrylate, butyl acrylate and methacrylate, propyl acrylate and methacrylate, 2-ethyl hexyl acrylate and methacrylate, cyclohexyl acrylate and methacrylate, decyl acrylate and methacrylate, isodecylacrylate and methacrylate, benzyl acrylate and methacrylate, and various reaction products such as butyl, phenyl, and cresyl glycidyl ethers reacted with acrylic and methacrylic acids, hydroxyl alkyl acrylates and methacrylates such as hydroxyethyl and hydroxypropyl acrylates and methacrylates, as well as amino acrylates and methacrylates. Acrylic acids include acrylic and methacrylic acid, ethacrylic acid, alpha-chloroacrylic acid, alpha-cycanoacrylic acid, crotonic acid, beta-acryloxy propionic acid, and beta-styrl acrylic acid. Vinyl esters include vinyl acetate, vinyl propionate, vinyl butyrates, vinyl benzoates, vinyl isopropyl acetates and the like. Styrene type monomers include styrene, methyl styrenes and similar lower alkyl styrenes, chlorostyrene, vinyl toluene, vinyl naphthalene, divinyl benzoate, and cyclohexene. Ethylene type monomers include alpha olefins such as ethylene, propylene, isobutylene, and cyclohexyl. Diene monomers include 1,3 butadiene, methyl-2-butadiene, 1,3-piperylene, 2,3 dimethyl butadiene, isoprene, cyclopentadiene, and dicyclopentadiene. Acrylonitrile type monomers include acrylonitrile and methacrylonitrile. Generally preferred monomers include vinyl chloride, acrylate, methyl acrylate, vinyl ester, ethylene, styrene, butadiene, acrylonitrile, or combinations thereof.

The above monomers can be copolymerized in any conventional manner such as in an aqueous medium by emulsion polymerization at temperatures typically between 50°C and 98°C. Polymerization of ethylenic double bonds is initiated by free-radical generating initiators such as organic peroxides or azo compounds. Suitable organic peroxides can include benzoyl peroxide, dicumyl peroxide, cumene hydroperoxide, paramethane hydroperoxide and similar peroxides. Azo compounds include dimethylazodiiobutyrate and azobisisobutyronitrile. Persufate initiators such as sodium, potassium, and ammonium persulfates can be used.

Polyvinyl chloride homopolymer and copolymers are based on the vinyl radical - $CH = CH-$ and comprise copolymerized vinyl chloride in conjunction with other copolymerized monomers such as vinyl acetate, vinyl alcohol, vinyl acetals, and occasionally vinyl fluoride as well as minor amounts of similar vinyl monomers. Vinyl acetate homopolymers comprise copolymerized vinyl acetate and copolymers thereof include other previously mentioned vinyl monomers copolymerized with vinyl acetate. Ethylene-vinyl acetate copolymers generally comprise between 5 percent and 50 percent by weight copolymerized vinyl acetate in conjunction with ethylene monomer where the monomers are copolymerized under high pressure. Styrene-butadiene polymers are block copolymers containing a higher weight percentage of copolymerized styrene than butadiene. Styrene and 1,3-butadiene monomers are copolymerized in an aqueous medium involving sequential multiple addition of the respective monomers along with initiator. Butadiene copolymers are similarly synthesized with various copolymerizable monomers previously described.

Polyurethane polymers are reaction products of polyols and polyisocyanates where isocyanates containing two or more isocyanate groups are connected with polyols containing two or more hydroxyl groups. Typical polyisocyanates include toluenediisocyanate, 1,6-hexamethylene diisocyanate and the various isophorone diisocyanates. Typical polyols include low molecular weight diols such as glycols, lower alkyl diols, various polyether diols or triols and various polyester diols or triols.

The polymeric binders have a softening point or Tg above -45°C and preferably between 0°C and 10°C, provided the binder Tg is at least 10°C below the softening point of the polymeric fiber composition. The polymeric binder can be thermoplastic or thermosetting. Thermosetting polymers further contain reactive functional groups known to the art and to the literature such as carboxyl, hydroxyl, amino or amido groups. Functional monomers, that is crosslinking agents include carboxyl, hydroxyl, amino, and amido functional group containing monomers. Carboxyl containing monomers include acrylic acid and lower alkyl substituted acrylic acids wherein the preferred carboxylic monomers are acrylic and methacrylic acids. Hydroxyl containing monomers are hydroxy containing ethylenically unsaturated monomers including hydroxy alkyl acrylates such as 2-hydroxy ethyl acrylate and methacrylate, 2-hydroxypropyl acrylate and methacrylate, and similar hydroxy alkyl acrylates. Amido containing monomers include acrylamide, methacrylamide, N-methylolacrylamide, or similar alkyl alkylol acrylamide monomers.

In accordance with the present invention, the high loft, nonwoven fibrous mat is treated with a binder by applying the binder to one or both sides of the high loft mat. Application can be by spray, dipping, or foaming with spray application being preferred. The amount of binder polymeric solids is generally from about 5 to about 200 parts and preferably from 20 to about 50 parts by weight based on 100 weight parts by weight of the of high loft mat to produce the binder impregnated composite of binder and mat.

High loft nonwoven mats are generally a highly porous composite of randomly orientated long synthetic fibers loosely bonded together and having a thickness of at least about one-sixteenth inch or larger and typically about three-sixteenths to one-quarter inch thicknesses. The synthetic fibers can be one-half to 4 or 5 inches in length and typically 1 1/2 to 2 inches in length. The diameter is from about 1.5 to about 20 denier and preferably from 6 to 10 denier. The high loft mat is formed of randomly orientated long fibers, anisotropically arranged, entangled, crimped, or curled in random fashion to form a highly porous mat of interlocking long fibers. The synthetic fibers are typically made from polymeric materials such as polyethylene, polyamide, polypropylene, polyacrylic, or rayon, and preferably polyester. The randomly oriented and crimped fibers are loosely held together in mat form by a small amount of an organic binder such as an adhesive or latex binder or other water-dispersed polymeric binder.

The binder impregnated composite of mat-binder is then compressed under pressure in a compressing means such as a hot platen press or heated rollers to form a compressed fibrous sheet. The compressing means imposes sufficient pressure typically between 1 psi and 1000 psi and preferably between 10 psi and 150 psi to cause uniform flow out of the polymeric binder between the fibers and throughout the mat. The compressing means can include heated platen surfaces heated to temperatures above the softening and/or melting point of the binder polymer particles but below the softening point of the synthetic fibers in order to assist flow out of the binder throughout the mat. If the binder is thermoplastic, the polymeric binder will set up upon cooling. If the binder is thermosetting, sufficient heat must be maintained to activate the function monomer or crosslinking agents and thermoset to the binder. In either situation, the temperature must be maintained to first obtain flow and then obtain a set or cure. Useful temperatures are from about 120°C to about 160°C and preferably from about 130°C to about 140°C. Useful time intervals for compressing and heating the impregnated mat can be from about 10 seconds to about 30 seconds and preferably from about 15 seconds to about 25 seconds. For example, a desirable compression step cycle can consist of compressing impregnated mat-binder within a heated platen at 135°C at 42 psi for 20 seconds using a vinyl copolymer binder having a Tg of 7°C.

The finished product consisting of an elastomeric compressed fibrous sheet can be removed from the compressing means and cooled to room temperature. The elastomeric compressed fibrous sheet is highly porous but exhibits unexpected high tensile strength of at least 5 pounds per inch, desirably at least 10 pounds per inch and preferably at least 15 pounds per inch. Porosity of the compressed fibrous nonwoven sheet decreases with increased weight ratios of binder solids to fibrous mat. The porosity is generally at least 2.5 to about 40 seconds and preferably from about 10 to about 35 seconds. The preferred compression process is a sheet compression process although a continuous compressing process step can be utilized by passing continuous high loft nonwoven mat through a resin impregnating bath and then compressing the resin impregnated binder-mat composite between heated rolls.

The present invention is further illustrated by the following examples wherein temperatures are in °C, pressures are in pi (pounds per inch), and parts are weight parts or percentages, unless otherwise indicated.

## POROSITY MEASUREMENT BY GURLEY DENSOMETER METHOD

The Gurley Densometer * was fitted with a 0.1 square inch orifice. Ten plies of the compressed high loft nonwoven mat was secured between the orifice and base plate of the tester and 400 cc of air was passed through the plied sample. The time for the air to pass through the sample was reported as porosity in seconds.

## TENSILE MEASUREMENT BY CRE TEST METHOD

An INTELLECT II * Constant Rate of Extension Tester was set up using the following parameters:
200 lb. load cell @ 50%
Jaw space @ 2 inches
Machine sensitivity @ 5%
Crosshead speed @ 12 inches per minute
Sample width @ 1 inch
Average mode (4 tests per sample)

## EXAMPLE 1

High loft nonwoven polyester mat, having di-

* Mfg. by W&LE Gurley - Troy, NY

* Mfg. by Thwing-Albert Instrument Col., Philadelphia, PA

mensions 6 inches by 6 inches and having a density of 4 ounces/square yard, was spray bonded with a vinyl acrylic binder comprising copolymerized heat reactive vinyl chloride monomer (41%) and butyl acrylate monomer (59%) at a weight ratio of 40 weight parts of polymeric binder solids per 100 weight parts of mat. The polymeric binder was applied to both surfaces of the mat. The binder impregnated mat was dried for about three minutes at 100°C. The predried impregnated mat was then placed between chrome ferro plates and compressed for 20 seconds at 135°C at 1,500 psig pressure. The resulting compressed elastomeric fibrous sheet exhibited a glossy appearance, high porosity and high tensile strength. The porosity was 9 seconds as measured by Gurley Densometer test and the tensile strength was 13.9 pi as measured by CRE test. The compressed sheet functioned well as a filter media for contaminated gases and had a thickness of from about 0.008 to about 0.012 inches. In comparison, the same high loft nonwoven polyester mat (unbound) had a tensile strength of 0.35 pi and a porosity of 2.5 seconds.

## EXAMPLE 2

In a manner as set forth in Example 1, the high loft nonwoven polyester mat was spray bonded with an acrylic binder comprising copolymerized heat reactive ethyl acrylate monomer (61%), methylmethacrylate monomer (33%), and acrylonitrile monomer (1%). The resulting porosity was 10 seconds and tensile strength was 18.4 pi.

## EXAMPLE 3

In a manner as set forth in Example 1, the high loft nonwoven polyester mat was spray bonded with a vinyl acetate binder comprised of polymerized heat reactive vinyl acetate monomer. The resulting porosity was 14 seconds and tensile strength was 14.1 pi.

## EXAMPLE 4

In a manner as set forth in Example 1, the high loft nonwoven polyester mat was spray bonded with a vinyl binder comprising copolymerized heat reactive ethylene monomer (19%), vinyl chloride monomer (78%) and vinyl acetate monomer (3%). The resulting porosity was 10 seconds and tensile strength was 15.1 pi.

## EXAMPLE 5

In a manner as set forth in Example 1, the high loft nonwoven polyester mat was spray bonded with an acrylic binder comprising copolymerized heat reactive ethyl acrylate monomer (70%) and styrene monomer (30%). The resulting porosity was 28 seconds and tensile strength was 24.1 pi.

## EXAMPLE 6

In a manner as set forth in Example 1, the high loft nonwoven polyester mat was spray bonded with an SBR binder comprising copolymerized heat reactive styrene monomer (65%) and butadiene monomer (35%). The resulting porosity was 34 seconds and tensile strength was 20.4 pi.

The above binders were prepared according to conventional emulsion polymerization well known to the art and to the literature.

As apparent from the above data, the resulting product had a good porosity and yet vastly improved tensile strength.

While in accordance with the Patent Statutes, the best mode and preferred embodiment has been set forth, the scope of the invention is not limited thereto, but rather by the scope of the attached claims.

**Claims**

1. A process for producing a porous, nonwoven, fibrous flat sheet, comprising the steps of:
providing a high loft nonwoven mat comprising randomly orientated fibers;
applying an organic polymeric binder to at least one surface of said high loft nonwoven mat to provide a composite of binder and mat containing at least 5 weight parts polymeric binder solids per 100 weight parts of said high loft nonwoven mat;
compressing said composite of binder and mat with a compressing means under a pressure of at least 1 psi and at temperature above the softening point of the polymeric binder for time sufficient for the polymeric binder to flow out within the composite and form a compressed flat sheet; and
removing said compressed flat sheet from the compressing means and cooling the compressed flat sheet at ambient temperatures to form a high tensile strength, porous, nonwoven fibrous flat sheet.

2. A process according to Claim 1 wherein said compressing step pressure is between 10 psi and 150 psi.

3. A process according to Claim 2, wherein said polymeric binder is applied to said high loft nonwoven mat in an amount of from about 5 to about 200 parts by weight of polymeric binder solids per 100 parts by weight of said mat.

4. A process according to Claim 1, wherein said polymeric binder is applied in an amount of from about 15 to about 30 weight parts by weight of polymeric binder solids per 100 weight parts of said mat.

5. A process according to Claim 3, wherein said polymeric binder is applied to said high loft nonwoven mat in an amount of from about 5 to about 200 parts by weight of polymeric binder solids per 100 parts by weight of said mat.

6. A process according to Claim 5, wherein said temperature during said compressing step is above the softening point of said polymeric binder but below the softening point of said fibers in said mat.

7. A process according to Claim 1, wherein said polymeric binder is applied to said high loft nonwoven mat by spraying.

8. A process according to Claim 1, wherein said polymeric binder is applied to both surfaces of said high loft nonwoven mat.

9. A process according to Claim 1, wherein the polymeric binder is made from a vinyl chloride monomer, an acrylate monomer, a methylacrylate monomer, a vinyl ester monomer, an ethylene monomer, a styrene monomer, a butadiene monomer, or an acrylonitrile monomer, or combinations thereof.

10. A process according to Claim 1, wherein said binder is a latex.

11. A process according to Claim 6, wherein the polymeric binder is made from a vinyl chloride monomer or an acrylate monomer, methylacrylate monomer, vinyl ester monomer, an ethylene monomer, a styrene monomer, a butadiene monomer, or an acrylonitrile monomer, or combinations thereof.

12. A process according to Claim 1, wherein said binder is a thermoplastic polymeric binder.

13. A process according to Claim 1, wherein said binder is a thermosetting polymeric binder.

14. A high tensile strength porous, flat nonwoven fibrous sheet of compressed high loft nonwoven mat produced in accordance with the process in Claim 3 where the high tensile strength, porous nonwoven fibrous flat sheet has a tensile strength of at least 5 pounds per inch and a porosity of at least 2.5 seconds, and said flat nonwoven fibrous sheet comprising by weight between 5 and 200 weight parts polymeric binder solids per 100 weight parts of nonwoven fibers.

15. A process for producing a high tensile strength, porous, nonwoven flat sheet from a high loft nonwoven organic fiber mat, comprising the steps of:
combining a high loft nonwoven fibrous mat with a polymeric binder to provide a binder-mat composite containing from about 5 to about 200 weight parts of polymeric binder solids per 100 weight parts by weight of said mat, wherein the softening point of said binder polymer particles is substantially below the softening point of the organic fibers in said mat;
compressing the binder-mat composite at pressures between 10 psi and 150 psi for time sufficient to cause uniform flow-out of the polymeric binder throughout said binder-mat composite and to compress said binder-mat composite into a nonwoven fibrous flat sheet, said compressing being conducted at a temperature above the softening point of said polymeric binder to fuse the binder polymeric particles but below the softening point of the organic fibers, so that a high tensile strength, porous, nonwoven flat sheet having a tensile strength of at least 5 pounds per inch and a porosity of at least 2.5 seconds is produced.

16. A process according to Claim 15, wherein the compressing step comprises compressing the binder-mat composite within a pair of heated platens, and wherein the binder-mat composite comprises from about 15 to about 30 weight parts by weight of polymeric binder solids for every 100 weight parts by weight of said mat, and wherein said nonwoven flat sheet has a tensile strength of at least 10 pounds per inch and a porosity of from about 10 to about 35 seconds.

17. A nonwoven, porous, thin, fibrous sheet having high tensile strength produced by compressing and heat setting a resin impregnated nonwoven high loft fibrous mat, the thin sheet comprising:
a polymeric resin impregnated sheet containing from about 5 parts to about 30 parts by weight of a polymeric binder interspersed between the fibers of the nonwoven fibrous sheet to provide a porous binder film between the fibers;
said polymeric binder being an additional copolymer of copolymerized ethylenically unsaturated monomers or a polyurethane, said binder having a Tg softening point above about -45°C but less than the softening point of said fibers;
said nonwoven fibers comprising randomly orientated organic polymeric fibers having a length of from about 1/2 inch to about 5 inches, and
said thin, nonwoven fibrous sheet having a porosity between 2.5 seconds and 40 seconds and a tensile strength of at least 5 pounds per inch.

18. The compressed fibrous sheet in Claim 17, wherein the polymeric fibers comprise polyester polymeric fibers, and wherein said nonwoven flat sheet has a tensile strength of at least 10 pounds per inch and a porosity of from about 10 to about 35 seconds.

19. The compressed fibrous sheet in Claim 18, wherein the polymeric binder is a thermoplastic binder.

20. The compressed fibrous sheet in Claim 18, wherein the polymer binder is a thermoset binder.

10
11
(1A)

14
16
12
(1B)

18
12
20
(1C)

24
(1D)

FIG.-1

EP 0 354 546 A2